# EUROPÄISCHE PATENTANMELDUNG

(11) **EP 3 553 634 A1**
(43) Veröffentlichungstag der Anmeldung: **16.10.2019**
(21) Anmeldenummer: 19178091.5
(22) Anmeldetag: 27.03.2015
(51) Int. Cl.: G06F 3/01, G06F 3/041

(54) **VERFAHREN UND SYSTEM ZUM BETREIBEN EINER ANZEIGEVORRICHTUNG**

(30) Priorität: 27.03.2014 EP 14162073
(62) Teilanmeldung aus: 15712636.8
(71) Anmelder: Apple Inc., Cupertino CA 95014 (US)
(72) Erfinder: SCHMIDT, Eberhard, 14532 Kleinmachnow (DE)
(74) Vertreter: Lang, Johannes

(57) **Zusammenfassung**

Die Erfindung betrifft ein Verfahren zum Betreiben einer Anzeigevorrichtung (12), folgende Schritte umfassend:

Erfassen von Bilddaten eines Auges eines Benutzers;
Ermitteln eines Eyetracking-Parameters basierend auf den Bilddaten;
Ermitteln eines Qualitätsparameters, der die Genauigkeit des Eyetracking-Parameters anzeigt; und
Bewegen eines beweglichen Elements einer visuellen Darstellung einer Softwareanwendung basierend auf dem Eyetracking-Parameter und dem Qualitätsparameter, wobei eine Bewegungsgeschwindigkeit des beweglichen Elements auf dem Qualitätsparameter basiert.

## Beschreibung

Die vorliegende Erfindung betrifft ein Verfahren zum Betreiben einer Anzeigevorrichtung, welches die folgenden Schritte umfasst: Zunächst werden Bilddaten zumindest eines Teils des Kopfes eines Benutzers erfasst. Anschließend wird aus den erfassten Bilddaten mindestens ein von dem Benutzer durch Bewegung zumindest eines Teils des Kopfes veränderbarer Parameter ermittelt und anschließend eine visuelle Darstellung auf einer Anzeigevorrichtung in Abhängigkeit des ermittelten mindestens einen Parameters gesteuert. Die Erfindung betrifft weiterhin ein Rechnerprogrammprodukt mit einem Programm für eine Recheneinrichtung mit Programmcodeabschnitten zum Ausführen und/oder Veranlassen der Schritte des Verfahrens, wenn das Programm auf der Rechnereinrichtung ausgeführt wird. Schließlich umfasst die vorliegende Erfindung ein entsprechendes System zum Betreiben einer Anzeigevorrichtung mit einer Erfassungsvorrichtung zum Erfassen von Bilddaten zumindest eines Teils des Kopfes eines Benutzers, mindestens einer Recheneinrichtung, die ausgelegt ist, mindestens einen von dem Benutzer durch Bewegung zumindest eines Teils des Kopfes veränderbaren Parameter aus den von der Erfassungsvorrichtung erfassten Bilddaten zu ermitteln, sowie eine Steuervorrichtung zum Steuern einer visuellen Darstellung auf einer Anzeigevorrichtung in Abhängigkeit des von der Recheneinrichtung ermittelten mindestens einen Parameters.

In diesem Zusammenhang sind so genannte Tracking-Vorrichtungen, beispielsweise Eye-, Face- oder Headtracker, bekannt, die ausgelegt sind, Bilder zumindest eines Teils des Kopfes eines Benutzers bereitzustellen und daraus die Blickrichtung, Augenbewegungen und andere Augen- und Kopfdaten des Benutzers zu ermitteln. Derartige Tracking-Vorrichtungen können als physische Einheit vorkommen oder verteilt sein. Verteilt sind sie, wenn beispielsweise Kameras und Beleuchtungen separat vorgesehen oder in einen Monitor integriert sind, während das Programm zur Datenverarbeitung auf einem daran angeschlossenen Rechner, beispielsweise PC, Tablet PC oder Smartphone etc., abläuft. Derartige Tracking-Vorrichtungen können jedoch auch als physische Einheit ausgebildet sein, wenn eine Rechnereinheit in einer Vorrichtung, beispielsweise nach Art einer von dem Benutzer zu tragenden Brille, einen Tablet PC oder ein Laptop, integriert ist, wobei diese Vorrichtung weiterhin mindestens eine Kamera, mindestens ein Display und optional mindestens eine Beleuchtungsvorrichtung aufweist. Optional kann In diesem Fall jedoch auch vorgesehen sein, dass die von der Rechnereinheit über die mindestens eine Kamera erfassten und gegebenenfalls weiter verarbeiteten Daten an einen weiteren Rechner, beispielsweise einen PC, Tablet PC oder an ein Smartphone etc., zur Nutzung weitergegeben werden.

Aus den von der Tracking-Vorrichtung ermittelten Bilddaten wird mindestens ein von dem Benutzer durch Bewegung eines Teils des Kopfes veränderbarer Parameter ermittelt. Dieser Parameter kann beispielsweise die Blickrichtung sein, jedoch auch Augenbewegungen, Kopfbewegungen und andere Augen- und Kopfdaten. Dieser mindestens eine Parameter wird dann dazu verwendet, eine visuelle Darstellung einer Softwareanwendung auf einer Anzeigevorrichtung zu steuern, beispielsweise eine Darstellung zu scrollen, eine Zelle in einer Excel-Tabelle zur Bearbeitung auszuwählen, ein Icon anzuwählen, etc. Auf diese Weise können beispielsweise auch Behinderte, denen eine herkömmliche Bedienung von Computerprogrammen nicht möglich ist, Softwareanwendungen nutzen.

Im Rahmen der nachfolgenden Ausführungen bezeichnet der Ausdruck "Anwendung" ein Anwendungsprogramm, beispielsweise Word. Mit dem Ausdruck "Datei" wird ein Dokument bezeichnet, wie das vorliegende. Kontextparameter können an eine Datei, oder eine Anwendung oder feinere Einheiten wie Objekte, Einstellungen und dergleichen gebunden sein.

Es hat sich gezeigt, dass Benutzern die Bedienung von Softwareanwendungen durch Steuern mittels einer Tracking-Vorrichtung in unterschiedlichen Situationen schwerer oder leichter fällt, wobei die Bedienbarkeit auch von den Anforderungen der Softwareanwendung, insbesondere der jeweils angestrebten Interaktion, abhängig sein kann.

Die Aufgabe der vorliegenden Erfindung besteht deshalb darin, ein eingangs genanntes Verfahren, ein entsprechendes Rechnerprogrammprodukt sowie ein entsprechendes System bereitzustellen, mittels dessen eine Bedienung einer visuell auf einer Anzeigevorrichtung darstellten Softwareanwendung auch in unterschiedlichen Situationen möglichst einfach und zuverlässig ermöglicht wird.

Diese Aufgabe wird gelöst durch ein Verfahren mit den Merkmalen von Patentanspruch 1, ein Rechnerprogrammprodukt mit den Merkmalen von Patentanspruch 13 sowie durch ein System mit den Merkmalen von Patentanspruch 14.

Die vorliegende Erfindung basiert auf der Kombination mehrerer Erkenntnisse: Zum einen wird die Robustheit der Steuerung visueller Darstellungen von Softwareanwendugnen auf einer Anzeigevorrichtung mittels Tracking-Vorrichtungen stark beeinflusst von den Umgebungsbedingungen, physiognomischen und kosmetischen Augen- und/oder Kopfparametern des Benutzers. Zum anderen wir die Robustheit der Steuerung durch das Verhalten des Benutzers beeinflusst. Weiterhin ist die Robustheit und auch ihre Beeinflussung durch die genannten Parameter unterschiedlich je nach den spezifischen Eigenschaften der verwendeten technischen Bauelemente, wie Kamerasensoren, Optiken, gegebenenfalls vorhandener Beleuchtung, und dergleichen. Unterschiedliche Tracking-Vorrichtungen und sogar unterschiedliche Geräte desselben Designs stellen nämlich nicht dieselbe Messgenauigkeit und Robustheit für alle Benutzer, Anwendungen und Situationen bereit. Überdies sind die Auswirkungen der genannten Unterschiede in der Robustheit je nach Anforderung der zu steuernden Softwareanwendung unterschiedlich. Je kleiner die steuerungsrelevanten Elemente auf dem Bildschirm dargestellt sind, desto größer sind die Auswirkungen der Robustheitsschwankungen auf die Bedienbarkeit und die Nutzerwahrnehmung. Schließlich ist zu berücksichtigen, dass, je mehr Benutzer solche Steuerungstechniken verwenden und je alltäglicher, d.h. unkontrollierter, die Einsatzgebiete und die Softwareanwendungen werden, eine gleichmäßige Qualität der Bedienbarkeit sowie der Benutzerwahrnehmung umso wichtiger wird.

Um unterschiedlichsten Benutzern eine effektive Benutzung derartiger Interaktionsvorrichtungen, d.h. Tracking-Vorrichtungen, mit denen Softwareanwendungen bedient werden können, zu ermöglichen, wird bei der vorliegenden Erfindung mindestens ein die Genauigkeit widerspiegelnder Qualitätsparameter ermittelt und ein "adaptiver Zoom" für die Interaktion bereitgestellt.

Wählt ein Benutzer im Rahmen der vorliegenden Erfindung beispielsweise durch Blickrichtung eine Zelle in einem Tabellenkalkulationsprogramm aus, kann erfindungsgemäß das Zellengitter dem Benutzer zu diesem Zweck mit einem Zoomlevel bereitgestellt werden, der auf die Qualität der Erfassung der Bilddaten bzw. der Genauigkeit des oben genannten ermittelten eines Parameters mit der speziell verwendeten Tracking-Vorrichtung bzw. in der bestimmten Situation, die durch Umgebungsbedingungen beeinflusst wird, bzw. für den bestimmten Benutzer abgestimmt ist. Umgekehrt besteht die Möglichkeit, eine von der Anwendung bereitgestellte Auswahlvorrichtung, beispielsweise eine Zellmarkierung in einem Tabellenkalkulationsprogramm, der normalerweise eine Zelle groß ist, so viele Zellen groß zu machen, wie sich aus der momentan erzielbaren Genauigkeit ergibt. Diese hängt ab von physischen Eigenschaften des Benutzers, den Umgebungsbedingungen, der verwendeten Hardware, von der Entfernung zwischen Benutzer und Tracking-Vorrichtung und anderen Bedingungen. Wenn demnach die Genauigkeit nur vier Zellen groß ist, dann wird immer ein Block von vier Zellen als Auswahlelement hervorgehoben angezeigt. Weiterhin kann auch in nicht diskreten Interaktionsszenarien der Cursor oder Mauszeiger der aktuellen Qualität der Erfassung der Bilddaten und/oder der Genauigkeit des oben genannten ermittelten Parameters angepasst werden und bei schlechterer Qualität oder geringerer Genauigkeit so viel größer werden, dass die Steuerung der Softwareanwendung immer entsprechend den visuellen Erwartungen erfolgt.

Die Unterschiede in der Darstellung müssen nicht groß sein, sondern können auch sehr klein sein. Entscheidend ist, dass die Anpassung dergestalt erfolgt, dass der Benutzer auch die Interaktion durchführen kann, die er aufgrund der visuellen Darstellung von Bedienelementen der Softwareanwendung erwartet.

Erfindungsgemäß wird deshalb mindestens ein Qualitätsparameter basierend auf der Erfassung der Bilddaten ermittelt und anschließend zumindest die Auflösung zumindest eines Teils der visuellen Darstellung in Abhängigkeit des mindestens einen Qualitätsparameters variiert.

Unter dem Begriff Auflösung ist im Rahmen der vorliegenden Erfindung die Größe der visuellen Darstellung gemeint. Eine Änderung der Auflösung im Sinne einer Änderung der Zahl der Pixel pro Objekt bei unveränderter Größe kann, aber muss nicht dabei vorgenommen werden.

Wird demnach eine schlechte Qualität auf der Grundlage der erfassten Bilddaten festgestellt, beispielsweise aus den erfassten Bilddaten selbst oder aus Zwischen- oder Ergebnisdaten, die aus diesen Bilddaten berechnet werden, so kann die Auflösung zumindest eines Teils der visuellen Darstellung verändert werden, um die Bedienung der Softwareanwendung mittels der Tracking-Vorrichtung durch den Benutzer weiterhin auch unter diesen schlechten Bedingungen zu ermöglichen. Auf diese Weise kann eine optimale Auflösung, beispielsweise der Zoom-Level der auf der Anzeigevorrichtung dargestellten visuellen Darstellung, bereitgestellt werden, um eine optimale "virtuelle Genauigkeit" für die Interaktion des Benutzers mit der Softwareanwendung zu ermöglichen.

Durch das erfindungsgemäße Verfahren kann demnach eine hohe Robustheit derartiger Anwendungen für unterschiedlichste Benutzer, Hardwareausstattungen und Umgebungsbedingungen sichergestellt werden. Insbesondere wird eine zuverlässige Bedienung einer derartigen Anwendung auch bei kostengünstiger Hardwareausstattung, bei hohen Genauigkeitsanforderungen der zu steuernden Softwareanwendung oder einem Benutzer mit eingeschränkten Bedienfähigkeiten ermöglicht

Der Qualitätsparameter betrifft dabei die Qualität, insbesondere Messgenauigkeit, des aus den Bilddaten ermittelten Parameters oder der Bilddaten selbst. Er stellt ein Maß für die Genauigkeit, insbesondere Messgenauigkeit, des ermittelten Parameters, und insbesondere auch der Ermittlung des Parameters, dar und ist damit ein vom ermittelten Parameter verschiedener Parameter. Der Qualitätsparameter und der ermittelte Parameter werden dabei auf Basis derselben Bilddaten ermittelt. Insbesondere der Qualitätsparameter kann dabei auf Basis dieser Bilddaten und/oder auf der Basis des ermittelten Parameters bestimmt werden. Zur Ermittlung des Qualitätsparameters werden bevorzugt Daten, die in die Ermittlung des Parameters eingehen und/oder der ermittelte Parameter selbst analysiert, wobei insbesondere die Daten die erfassten Bilddaten und/oder Zwischen- und/oder Ergebnisdaten, die aus den Bilddaten berechnet werden, darstellen können. Somit kann der ermittelte Parameter als eine Messgröße darstellend aufgefasst werden, wobei der Qualitätsparameter die zur Messgröße gehörige Messgenauigkeit bzw. Verlässlichkeit angibt bzw. ein Maß für die zur Messgröße gehörige Genauigkeit, insbesondere Messgenauigkeit, darstellt. Der Qualitätsparameter quantifiziert, insbesondere auch in prognostizierender Weise, also z.B., wie groß eine Abweichung des ermittelten Parameters von einem tatsächlichen Parameter, z.B. maximal, mindestens oder im Mittel, ist, beispielsweise eine maximal mögliche Abweichung zwischen der ermittelten Blickrichtung von einer tatsächlichen Blickrichtung. Der Qualitätsparameter kann auch einen Schätzwert angeben, um den der ermittelte Parameter vom korrespondierenden tatsächlichen Parameter, z.B. maximal, abweicht. Der Qualitätsparameter kann bspw. auch die tatsächliche oder geschätzte Abweichung zeitlich unmittelbar oder mit in einem bestimmten zeitlichen Abstand aufeinanderfolgender ermittelter Parameter angeben, z.B. in Form einer Streuung der aufeinanderfolgend ermittelten Parameter um einen Mittelwert. Hierzu kann zur Bestimmung der Abweichung u.a. die Summe absoluter Differenzwerte zwischen ermittelten Parametern oder die Summe absoluter Differenzwerte zwischen ermittelten Parametern und das Mittel der ermittelten Parametern oder andere Verfahren wie Standardabweichung, Varianz, Korrelation, Maß spektraler Konstanz (spektrale Flachheit) herangezogen werden. Der Qualitätsparameter als zeitliche Abweichung von ermittelten Parametern kann bspw. für einen festen oder festen und überlappenden oder von einem Blickereignis (Fixation, Sakkade etc.) bestimmten Zeitraum bestimmt werden.

Der ermittelte Parameter weist also eine Messungenauigkeit auf, die der zugeordnete Qualitätsparameter angibt bzw. widerspiegelt. Es kann z.B. vorgesehen sein, dass der Qualitätsparameter selbst dabei nicht die Umgebungsbedingungen bzw. Umgebungseinflüsse angibt, die Einfluss auf die Messgenauigkeit haben, sondern die Messgenauigkeit bzw. ein Maß für die Messgenauigkeit selbst darstellt. Der Qualitätsparameter selbst gibt z.B. damit keine Positionsinformation über den Benutzer an, und z.B. lässt sich eine solche auch nicht aus dem Qualitätsparameter ableiten. Vorteilhafterweise müssen daher die Umgebungsbedingungen, z.B. Umgebungshelligkeit, Abstand des Benutzers zur Erfassungseinrichtung, usw., bei der Erfassung der Bilddaten selbst nicht notwendigerweise bekannt sein, während jedoch ihre Auswirkungen auf die Ermittlung des Parameters ermittelt und angegeben werden können, wenn z.B. der Qualitätsparameter Bildparameter wie Kontrast oder Rauschanteile beobachtet und daraus ein Einfluss auf die Genauigkeit oder Stabilität des ermittelten Parameters bestimmt wird. Bei Bedarf können aber aus den Bildparametern auch Rückschlüsse auf Umgebungsbedingungen, wie z.B. Umgebungshelligkeit, gezogen werden.

Bevorzugt können zur Ermittlung des mindestens einen Qualitätsparameters mindestens eine Qualität und/oder Größe des aus den Bilddaten ermittelten Parameters und/oder eine Qualität der Erfassung der Bilddaten und/oder die erfassten Bilddaten analysiert werden. Hierdurch lässt sich die Messgenauigkeit des ermittelten Parameters vorteilhafterweise ermitteln, ohne die aktuellen Umgebungsbedingungen kennen oder direkt messen zu müssen. Insbesondere können bei oben genannter Analyse auch die Größe eines zur Ermittlung des Parameters erforderlichen und aus den Bilddaten ermittelten Zwischenparameters ausgewertet werden und/oder die Qualität der Bilddaten.

Betrifft die Auflösung eine Eigenschaft, insbesondere die Größe, der visuellen Darstellung, so wird die Auflösung bevorzugt derart variiert, dass bei durch den Qualitätsparameter angegebener geringerer Genauigkeit des ermittelten Parameters die Auflösung erhöht, z.B. die Darstellung vergrößert wird, gegenüber einer Auflösung bei durch den Qualitätsparameter angegebener höherer Genauigkeit. Betrifft die Auflösung die Auflösung einer Bewegungsgeschwindigkeit eines bewegbaren Elements, das von der visuellen Darstellung umfasst ist, wird die Auflösung z.B. derart variiert, dass die Auflösung bei geringerer Genauigkeit reduziert, z.B. die Bewegungsgeschwindigkeit verringert, ist gegenüber der Auflösung bei höherer Genauigkeit des ermittelten Parameters. Dies erleichtert in beiden Fällen die Steuerung der Darstellung für den Benutzer.

Bevorzugt umfasst die visuelle Darstellung zumindest ein durch Bewegung zumindest eines Teils des Kopfes bewegbares Element, wobei in Schritt e) die Auflösung einer Bewegungsgeschwindigkeit des zumindest einen bewegbaren Elements in Abhängigkeit des mindestens einen Qualitätsparameters variiert wird.

Bei schlechten Bedingungen kann es für den Benutzer bei einer gegebenen Auflösung unmöglich sein, durch Bewegung zumindest eines Teils des Kopfes ein Element auf der visuellen Darstellung zielgenau anzufahren. Wird dann die Auflösung der Bewegungsgeschwindigkeit des bewegbaren Elements reduziert, wird auf diese Weise die Bedienung der Anwendung erleichtert.

Bei einer bevorzugten Ausführungsform wird in Schritt e) die Auflösung der gesamten visuellen Darstellung in Abhängigkeit des mindestens einen Qualitätsparameters variiert. Auf diese Weise wird die Bedienung der Softwareanwendung beispielsweise von Benutzern mit eingeschränkten visuellen Fähigkeiten, beispielsweise infolge von Augenkrankheiten, Alter und dergleichen, erleichtert.

Alternativ kann in Schritt e) die Auflösung nur eines Teils der visuellen Darstellung in Abhängigkeit des mindestens einen Qualitätsparameters variiert werden. Dadurch wird der auf der Anzeigevorrichtung darstellbare Inhalt nur unwesentlich reduziert, sodass beispielsweise trotz einer Vergrößerung der Auflösung mit mehreren Fenstern gearbeitet werden kann, wenn beispielsweise nur der Inhalt des jeweils aktiven Fensters mit verbesserter Auflösung dargestellt wird.

Die visuelle Darstellung kann zumindest ein statisches und/oder ein dynamisches Element umfassen, wobei in Schritt e) die Auflösung des statischen und/oder des dynamischen Elements in Abhängigkeit des mindestens einen Qualitätsparameters variiert wird. Als Teil der visuellen Darstellung, deren Auflösung variiert wird, kann mindestens eines der Elemente aus der folgenden Gruppe in Betracht kommen: ein Bereich gemäß einer Lupenfunktion, der Inhalt eines vorgebbaren Arbeitsfensters, ein Mauszeiger, ein Cursor und/oder logische Segmente einer Anwendung, die die visuelle Darstellung erzeugt. Dies könnte beispielsweise bei Excel oder anderen Software-Anwendungen den Zellenbereich eines Arbeitsblattes, die Inhalte einer Zelle, die Symbolleisten, deren Pulldown-Menüs, Scroll-Leisten etc. betreffen.

Auf diese Weise kann beispielsweise eine Auswahlvorrichtung, also ein Mauszeiger oder ein Cursor, derart variiert, d.h. bei schlechten Bedingungen derart vergrößert werden, dass er den Genauigkeitslevel wiedergibt, mit dem der Benutzer in der aktuellen Situation visuell dargestellte Zielobjekte der auf der Anzeigevorrichtung dargestellten Anwendung auswählen kann.

Bevorzugt wird zur Ermittlung des mindestens einen Qualitätsparameters mindestens eine Größe aus der folgenden Gruppe ermittelt: Parameter der in Schritt a) erfassten Bilddaten, insbesondere Rauschanteile, Frequenz- und/oder Intensitätsverteilungen im Bild und/oder des mindestens einen ermittelten Objekts, einerseits und/oder Parameter bei der Auswertung der in Schritt a) erfassten Bilddaten, insbesondere bei aus den erfassten Bilddaten berechneten Zwischen- oder Ergebnisdaten andererseits.

Mit anderen Worten können die Qualitätsparameter an jeder Stelle der Signalverarbeitungskette, vom Kamerabild bis zu den endgültig berechneten Daten, ermittelt werden. Bei den Rauschanteilen, dem Signal-Rauschabstand oder anderen Parametern der ermittelten Objekte kommen insbesondere solche von Pupille, Limbus oder cornealem Reflex in Betracht. Bei Rauschanteilen der Ergebnisdaten kommt insbesondere beispielsweise die Blickrichtung oder die Kopforientierung in Betracht.

Zur Ermittlung des mindestens einen Qualitätsparameters werden die in Schritt a) erfassten Bilddaten bevorzugt analysiert im Hinblick auf mindestens eine der folgenden Größen: Frequenzanteile in vorgebbaren Frequenzbereichen, insbesondere durch örtlich-zeitliche Frequenzanalyse (spatio-temporal frequency analysis) und Wavelets, Kontrastwerte in vorgebbaren Bildbereichen, insbesondere Gradienten, Kanten, Intensitäten, Häufigkeiten/Verteilungen in Bildbereichen, Größenwerte von vorgebbaren Parametern, Größenwerte von Ergebnisdaten, das Vorhandensein mindestens eines vorgebbaren Objekts und/oder eine Änderungs- oder Beschleunigungsrate von aus den in Schritt a) erfassten Bilddaten ermittelten Zwischen- oder Ergebnisdaten. Weiterhin kommen für die Analyse, insbesondere entspechende, maschinelle/adaptive Lernverfahren in Betracht. Durch Auswertung der Frequenzanteile in vorgebbaren Frequenzbereichen können Rauschanteile bzw. Jitter als Auffälligkeiten ausgewertet werden. Bei der Auswertung der Kontrastwerte können bestimmte Bildbereiche insbesondere um bestimmte Messobjekte, beispielsweise die Pupille etc., zur Auswertung in Betracht kommen. Bei den Größenwerten von vorgebbaren Parametern kommen insbesondere Größenwerte der Messobjekte in Betracht. Wird beispielsweise ein kleiner cornealer Reflex ermittelt, ist eher von einer niedrigen Messqualität auszugehen. Bei den Größenwerten von Ergebnisdaten kommt beispielsweise der Blickwinkel in Betracht: So ist ein kleiner Blickwinkel eher ein Indiz für eine hohe Messqualität, während ein großer Blickwinkel eher ein Indiz für eine geringe Messqualität darstellt. Wird das Vorhandensein vorgebbarer Objekte geprüft, ist beispielsweise zu berücksichtigen, ob das Vorhandensein eines oder zweier Augen ermittelt wird. Werden beispielsweise alle gesuchten kornealen Reflexe für beide Augen gefunden, so ist dies ein Indiz für eine höhere Messqualität, als wenn korneale Reflexe bei einem oder beiden Augen nicht gefunden wurden. Unterscheiden sich weiterhin beispielsweise die Blickwinkel zweiter Augen um mehr als einen vorgebbaren Schwellwert, so kann dies ein Indiz für eine geringe Messqualität sein. Eine hohe Änderungs- oder Beschleunigungsrate beispielsweise der Kopfpositionsdaten spricht eher für eine niedrige Messqualität, während umgekehrt niedrige Änderungs- und Beschleunigungsraten für eine hohe Messqualität sprechen.

Die Auflösung kann gemäß einer linearen, einer nicht-linearen, einer stetigen und/oder einer nicht-stetigen Kennlinie variiert werden. Auf diese Weise kann beispielsweise eine Anpassung an die Leistungsfähigkeit der entsprechenden Recheneinheit vorgenommen oder den spezifischen Anforderungen einer bestimmten Anwendung Rechnung getragen werden. Beispielsweise funktionieren implizite oder auch manchmal passiv genannte Anwendungsfälle, in denen zum Beispiel der Blickpunkt auf die Darstellung verwendet, aber nicht gezeigt wird, wie dies beispielsweise bei einigen Spielen der Fall ist, besser mit einer stetigen Kennlinie. Explizite Anwendungsfälle, also solche, bei denen der Blickpunkt sichtbar gemacht wird und ein Benutzer zum Beispiel einen Cursor oder eine andere Auswahlmarkierung sichtbar bewegt, wie beispielsweiese ein Tabellenkalkulationsprogramm oder Eingabemasken, funktionieren besser mit diskreten Vergrößerungen. Analoges funktioniert für die Interaktion durch Kopfbewegung mit einer Anwendung. Eine nicht-lineare Kennlinie ist besonders in solchen Anwendungsfällen sinnvoll, in denen die Größenunterschiede der Interaktionselemente der Darstellung erheblich sind und bei geringerer Messqualität schnelle eine stärkere Vergrößerung gewählt werden muss, um eine flüssige Interaktion zu gewährleisten.

Es kann vorgesehen sein, dass die Variation der Auflösung durch einen Benutzer ein- und ausgeschaltet werden kann, insbesondere durch einen Tastenbefehl, einen Sprachbefehl oder einen Gestenbefehl. Wird beispielsweise die Auflösung der gesamten visuellen Darstellung vergrößert, kann dies dazu führen, dass die Arbeit mit einem in einem Arbeitsfenster ablaufenden Tabellenkalkulationsprogramm erleichtert wird. Jedoch könnten nach oder während der Bearbeitung andere Arbeitsfenster schlecht zu erkennen sein. Durch die Möglichkeit, die Variation der Auflösung ein- und auszuschalten, können dann auf einfache Weise wieder alle Arbeitsfenster auf der Anzeigevorrichtung erkennbar sein, um beispielsweise einem Benutzer einen Wechsel der Softwareanwendung zu ermöglichen. Außerdem kann es sinnvoll sein, eine oder mehrere global für den Nutzer oder spezifisch für bestimmte Anwendungsfälle geeignete Auflösungen abzuspeichern und wieder abzurufen. Besonders nützlich kann es sein, derartige spezifische Auflösungen an den Anwendungsfall zu binden und im Falle seines Eintretens automatisch einzustellen, so dass ein Gewöhnungseffekt beim Nutzer eintreten kann und die Auflösung nicht mehr als nötig variiert wird.

Bevorzugt wird der mindestens eine Qualitätsparameter ermittelt nach Schritt a), insbesondere mit Schritt b) oder zwischen Schritt b) und Schritt c), oder alternativ fortlaufend, d.h. zunächst nach Schritt a) und weiterhin in vorgebbaren zeitlichen Abständen und/oder in Abhängigkeit mindestens eines vorgebbaren Ereignisses, bevorzugt bei Über- und/oder Unterschreiten mindestens eines vorgebbaren Schwellwerts für Bild-, Zwischen- oder Ergebnisdaten, insbesondere mindestens eines aus diesen Daten abgeleiteten Qualitätsparameters. Als besonders bevorzugte Zeitpunkte zur Ermittlung des mindestens einen Qualitätsparameters ist der Zeitpunkt der Initialisierung des Systems, inklusive der Kalibrierung und der Validierung, oder der Wechsel von Anwendungen, Dateien, Ansichten oder Prozessschritten, die neue Größen der Bedienelemente zur Folge haben können, zu nennen.

Die zur Variation der Auflösung nötigen Berechnungen können in der Trackingvorrichtung, beispielsweise in einem Eyetracker, oder mit einem separaten Programm auf dem Zielrechner oder als Teil des Betriebssystems oder als Teil einer Anwendung vorgenommen werden.

Als der mindestens eine Teil der Kopfes des Benutzers wird/werden bevorzugt dessen Kopf selbst und/oder ein und/oder zwei Augen des Benutzers bewegt.

Weitere bevorzugte Ausführungsformen ergeben sich aus den Unteransprüchen.

Die mit Bezug auf das erfindungsgemäße Verfahren vorgestellten bevorzugten Ausführungsformen und deren Vorteile gelten entsprechend, soweit anwendbar, für das erfindungsgemäße Rechnerprogrammprodukt und das erfindungsgemäße System zum Betreiben einer Anzeigevorrichtung.

Nachfolgend werden nunmehr Ausführungsbeispiele der vorliegenden Erfindung unter Bezugnahme auf die beigefügten Zeichnungen näher beschrieben. Es zeigen:
- Fig. 1: in schematischer Darstellung den Aufbau einer ersten Ausführungsform eines erfindungsgemäßen Systems;
- Fig. 2: in schematischer Darstellung den Aufbau einer zweiten, einer dritten und einer vierten Ausführungsform eines erfindungsgemäßen Systems;
- Fig. 3: ein erstes Anwendungsbeispiel der vorliegenden Erfindung;
- Fig. 4: ein zweites Anwendungsbeispiel der vorliegenden Erfindung;
- Fig. 5: ein drittes Anwendungsbeispiel der vorliegenden Erfindung;
- Fig. 6: in schematischer Darstellung einen Signalflussgraphen einer ersten Ausführungsform des erfindungsgemäßen Verfahrens; und
- Fig. 7: in schematischer Darstellung einen Signalflussgraphen einer zweiten Ausführungsform des erfindungsgemäßen Verfahrens.

In den unterschiedlichen Figuren werden im Nachfolgenden der Übersichtlichkeit halber für gleiche und gleichwirkende Elemente dieselben Bezugszeichen verwendet.

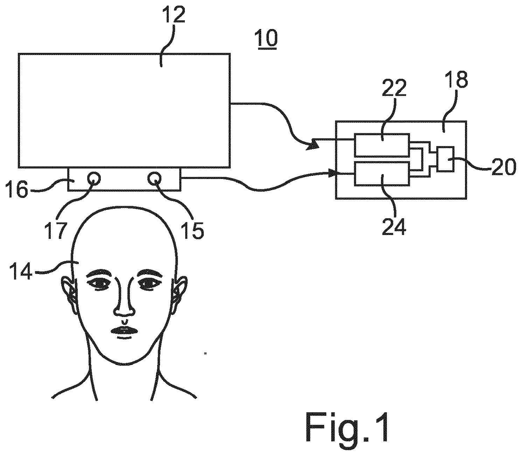

Fig. 1 zeigt in schematischer Darstellung den Aufbau eines erfindungsgemäßen Systems 10, wie er insbesondere bei einer stationären Situation Anwendung finden kann. Dabei ist ein Monitor 12 vor einem Benutzer 14 positioniert, wobei an der Unterseite des Monitors 12 ein Eyetracker 16 angeordnet ist, der eine Beleuchtungsvorrichtung 17 und eine Kameravorrichtung 15 zum Erfassen von Bilddaten mindestens eines Teils des Kopfes des Benutzers 14 umfasst. Mit dem Monitor 12 und dem Eyetracker 16 ist eine Datenverarbeitungseinrichtung 18 gekoppelt, in der eine Softwareanwendung 20 abgelegt ist, die eine visuelle Darstellung auf dem Monitor 12 erzeugt. Mittels einer Steuervorrichtung 22, die mit einer Recheneinrichtung 24 der Datenverarbeitungsvorrichtung gekoppelt ist, lässt sich die visuelle Darstellung der Anwendung auf dem Monitor 12 steuern. Die Recheneinrichtung 24 ist ausgebildet, auf der Basis der vom Eyetracker 16 erfassten Bilddaten zumindest eines Teils des Kopfes eines Benutzers, insbesondere dessen Kopf selbst oder ein oder zwei Augen, mindestens einen Qualitätsparameter zu ermitteln. Die Steuervorrichtung 22 ist ausgelegt, die Auflösung zumindest eines Teils der visuellen Darstellung auf dem Monitor 12 in Abhängigkeit des mindestens einen von der Recheneinheit 24 ermittelten Qualitätsparameters zu variieren. In einem nicht gezeigten Ausführungsbeispiel können auch mehrere Beleuchtungsvorrichtungen 17 und/oder mehrere Kameravorrichtungen 15 vorgesehen sein. Weiter alternativ kann die oben genannte Ermittlung des Qualitätsparameters auch auf einer Recheneinrichtung stattfinden, die im Eyetracker untergebracht ist, wobei dann nur die Messdaten und der ermittelte Qualitätsparameter an die Datenverarbeitungseinrichtung 18 weitergegeben werden.

Zur Ermittlung des mindestens einen Qualitätsparameters kann die Recheneinheit 24 Parameter in den erfassten Bilddaten auswerten, insbesondere Rauschanteile im Bild und/oder Rauschanteile der ermittelten Objekte. Sie kann auch Parameter bei der Auswertung der erfassten Bilddaten auswerten, insbesondere bei den aus den erfassten Bilddaten berechneten Zwischen- oder Ergebnisdaten. Dazu kann die Recheneinheit 24 ausgelegt sein, die erfassten Bilddaten zu analysieren im Hinblick auf Frequenzanteile in vorgebbaren Frequenzbereichen, Kontrastwerte in vorgebbaren Bildbereichen, Größenwerte von vorgebbaren Parametern, Größenwerte von Ergebnisdaten, das Vorhandensein vorgebbarer Objekte und/oder eine Änderungs- oder Beschleunigungsrate von aus den erfassten Bilddaten ermittelten Zwischen- oder Ergebnisdaten.

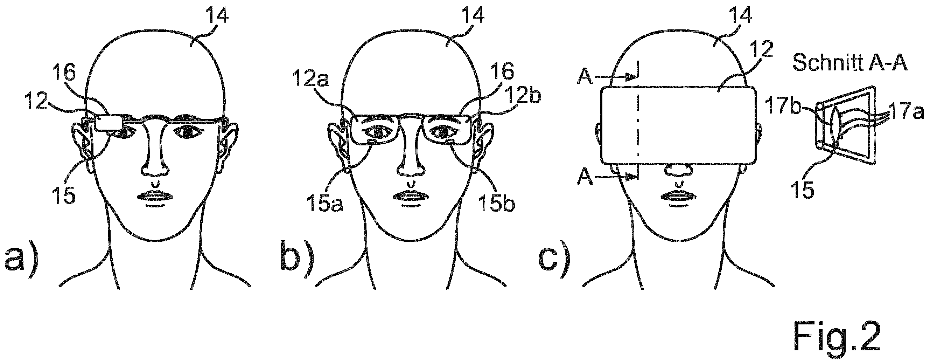

Fig. 2 zeigt schematisch Komponenten eines Ausführungsbeispiels eines erfindungsgemäßen Systems, wie sie bevorzugt bei einer mobilen Situation zur Anwendung kommen können. Dabei wird ein Eyetracker 16 benutzt, der nach Art einer Brille von einem Benutzer 14 getragen werden kann und neben mindestens einer Kamera 15 zur Erfassung von Bilddaten mindestens eines Auges des Benutzers 14 weiterhin über mindestens eine Anzeigeeinheit 12, beispielsweise ein Display, verfügt, die mit dem tragbaren Eyetracker 16 derart gekoppelt ist, dass ein Bild in mindestens ein Auge des Benutzers 14 projizierbar ist. Während Fig. 2a eine monokulare Ausführungsform zeigt, ist in Fig. 2b eine binokulare Ausführungsform dargestellt. Die monokulare Ausführungsform kann mit nur einer Kamera 15 und einer Anzeigevorrichtung 12 ausgebildet sein, während die binokulare Ausführungsform mit zwei Anzeigevorrichtungen 12a, 12b und zwei Kameras 15a, 15b realisiert ist.

In der in Fig. 2c dargestellten Ausführungsform ist wie in einem geschlossenen kopfgetragenen Display (HMD) die Anzeigevorrichtung 12 undurchsichtig ausgebildet und in einer mehr oder weniger geschlossenen Maske angeordnet, die überdies die mindestens eine Kamera 15 sowie LEDs 17a und eine den LEDs 17a zugeordnete Optik 17b umfasst des Eyetrackers 16 entweder in monokularer oder binokularer Form enthält. In einer derartigen Ausführungsform liefert die Anzeigevorrichtung 12 die Bilder für beide Augen des Benutzers 14.

Die Datenverarbeitungseinrichtung 18 von Fig. 1 kann bei den Ausführungsformen von Fig. 2 sowie der erwähnten Alternative in dem jeweiligen Eyetracker 16 vorgesehen sein. Es ist jedoch auch möglich, die Eyetracker 16 dieser über Kabel oder Funk mit einer mobilden oder stationären Datenverarbeitungseinrichtung 18 zu koppeln. Im Falle einer mobilen Ausführung der Datenverarbeitungsvorrichtung 18 kann diese bevorzugt als Smartphone oder Tablet PC ausgebildet sein.

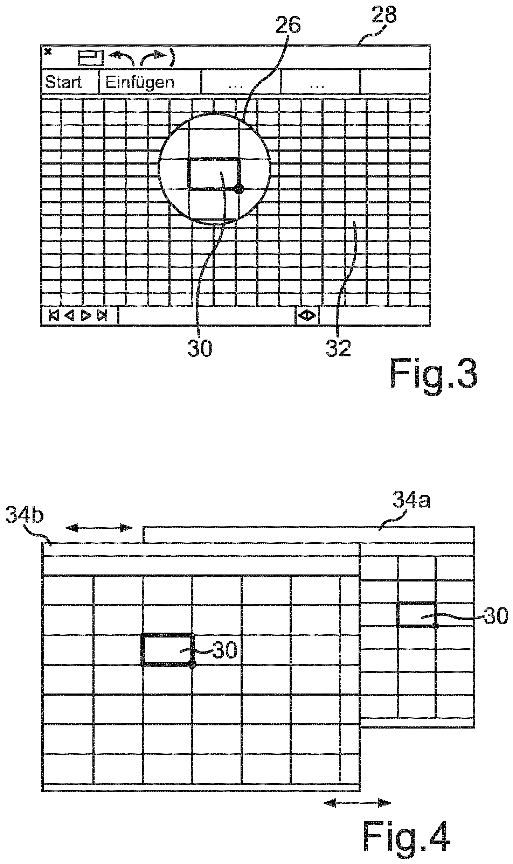

Fig. 3 zeigt in schematischer Darstellung ein Beispiel für eine Anwendung der vorliegenden Erfindung bei einem Tabellenkalkulationsprogramm, beispielsweise Excel. In Abhängigkeit des ermittelten Qualitätsparameters wird die Auflösung in einem Bereich 26 gemäß einer Lupenfunktion vergrößert. Der Bereich 26 kann in Abhängigkeit einer aus den erfassten Bilddaten ermittelten Blickrichtung des Benutzers über die gesamte visuelle Darstellung 28 bewegt werden. Wie deutlich zu erkennen ist, sind die Abmessungen einer Zelle 30 innerhalb des Bereichs 26 deutlich größer als bei einer Zelle 32 außerhalb des Bereichs 26. Wie weiterhin zu erkennen ist, hat der Benutzer 14 durch eine vorgebbare Maßnahme die Zelle 30 zur Bearbeitung aktiviert. Die Bearbeitung kann erfindungsgemäß bei einer größeren, dem Status des ermittelten Qualitätsparameters und gegebenenfalls der Kontextinformation entsprechenden Auflösung erfolgen, als sie für die Darstellung außerhalb des Bereichs 26 verwendet wird. Es kann vorgesehen sein, dass der Benutzer eine einmal ermittelte Vergrößerungseinstellung speichern und wiederverwenden kann. Weiterhin kann vorgesehen sein, dass die Auflösung bei Feststellen einer Änderung des Qualitätsparameters variiert werden kann. Damit wird eine jederzeit optimale Darstellung für eine effiziente Bedienung erreicht.

Auf der einen Seite ermöglicht es diese Funktion dem Benutzer 14, den Überblick zu bewahren, andererseits ermöglicht sie eine Bearbeitung unter guten optischen Bedingungen. Die Maßnahme zur Aktivierung der Zelle 30 innerhalb des Bereichs 26 kann beispielsweise darin bestehen, dass der Benutzer 14 seinen Blick auf diese Zelle richtet, gegebenenfalls gleichzeitig eine Taste drückt, eine Geste ausführt oder ein akustisches Signal von sich gibt. Es kann auch vorgesehen sein, dass die Aktivierung der Zelle 30 dadurch erfolgt, dass der Benutzer 14 seinen Blick auf diese Zelle 30 richtet und innerhalb eines vorgebbaren Zeitfensters mit einem oder zwei Augen zwinkert oder die Zelle für eine vorgebbare Mindestzeit fixiert. Andere Möglichkeiten sind für den Fachmann denkbar, jedoch nicht Gegenstand der vorliegenden Erfindung.

Fig. 4 zeigt ein weiteres Anwendungsbeispiel der vorliegenden Erfindung. Hier wird in Abhängigkeit des mindestens einen Qualitätsparameters die Auflösung eines Arbeitsfelds, d.h. beispielsweise eines Arbeitsfensters, variiert. Liegen gute Verhältnisse vor, d.h. beispielsweise eine hochwertige Tracking-Vorrichtung, eine gute Beleuchtung, ein geringer Abstand zwischen Tracking-Vorrichtung und Benutzer etc., kann das Arbeitsfenster mit niedriger Auflösung auf der Anzeigevorrichtung 12 dargestellt werden, beispielsweise wie das Arbeitsfenster 34a. Lässt jedoch der Qualitätsparameter auf schlechte Bedingungen schließen, wird das Arbeitsfenster mit einer verbesserten Auflösung dargestellt, siehe Arbeitsfenster 34b.

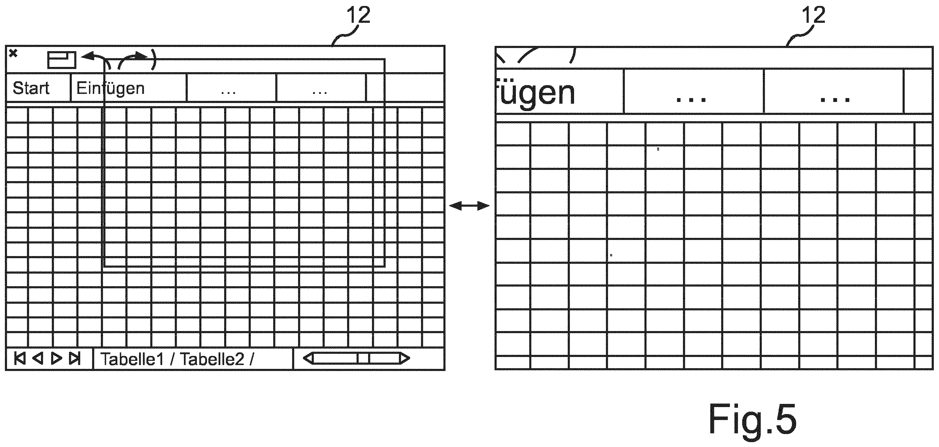

Fig. 5 zeigt eine weitere Anwendung der vorliegenden Erfindung. Links ist die visuelle Darstellung auf dem Monitor 12 bei guten Verhältnissen gezeigt, während rechts die visuelle Darstellung derselben Anwendung bei schlechten Verhältnissen gezeigt ist. Wie deutlich zu erkennen ist, ist die Auflösung der gesamten Darstellung vergrößert worden.

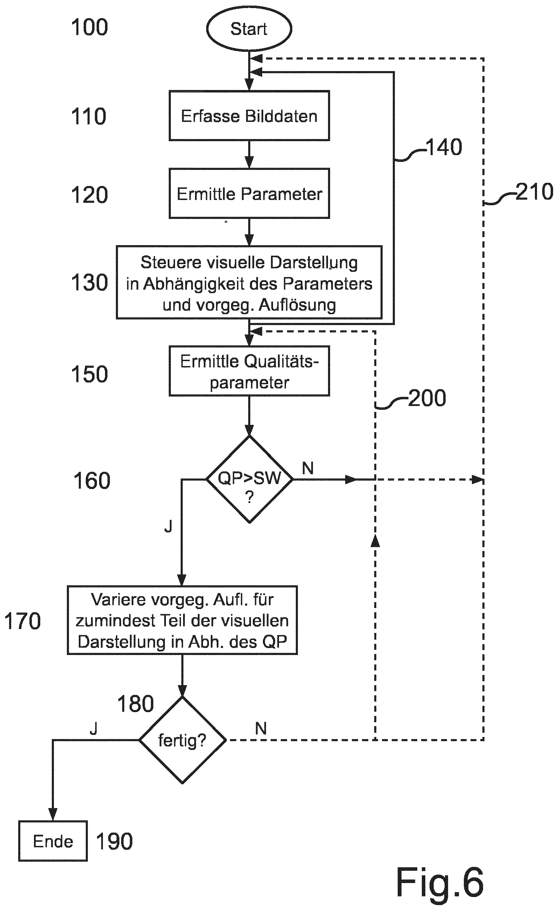

Fig. 6 zeigt ein Ausführungsbeispiel eines erfindungsgemäßen Verfahrens. Das Verfahren startet in Schritt 100. In Schritt 110 werden Bilddaten zumindest eines Teils des Kopfes eines Benutzers erfasst. Anschließend wird in Schritt 120 mindestens ein von dem Benutzer durch Bewegung zumindest eines Teils des Kopfes veränderbarer Parameter aus den in Schritt 110 erfassten Bilddaten ermittelt. Anschließend wird in Schritt 130 eine visuelle Darstellung auf einer Anzeigevorrichtung in Abhängigkeit des ermittelten mindestens einen Parameters und einer vorgegebenen Auflösung gesteuert. Beispielsweise wird in Schritt 120 die Blickrichtung ermittelt und dadurch eine Zelle 30 aktiviert, siehe hierzu beispielsweise Fig. 3 und 4. In jedem Fall läuft dann die Messschleife, wie durch den Schritt 140 symbolisiert, fortlaufend weiter, um den Parameter aus den Bilddaten zu ermitteln, zumindest solange die so gestaltete Interaktion aktiv ist.

Überdies wird vorliegend in Schritt 150 mindestens ein Qualitätsparameter auf der Basis der in Schritt 110 erfassten Bilddaten ermittelt. Dabei können die unmittelbar erfassten Bilddaten ausgewertet werden oder auch daraus berechnete Zwischen- oder Ergebnisdaten. Insbesondere werden dabei Rauschanteile im Bild und/oder Rauschanteile der ermittelten Objekte näher untersucht oder beispielsweise Rauschanteile der ermittelten Blickrichtung.

In Schritt 160 wird geprüft, ob der Wert des Qualitätsparameters über einem vorgebbaren Schwellwert liegt. Ist dies der Fall, so wird dann in Schritt 170 die vorgegebene Auflösung für zumindest einen Teil der visuellen Darstellung auf der Anzeigevorrichtung in Abhängigkeit dieses Werts variiert. Wird jedoch in Schritt 160 ein Unterschreiten des Schwellwerts festgestellt, wird das Verfahren entweder im Schritt 200 oder im Schritt 210 fortgesetzt (je nach Implementierung).

Die Schritte 150 bis 170 können einmalig ausgeführt werden, beispielsweise bei der Initialisierung eines erfindungsgemäßen Systems, insbesondere inklusive der Kalibrierung und der Validierung. In diesem Fall wird gegebenenfalls unter Umgehung des Schritts 160 im Schritt 180 in den mit "J" gekennzeichneten Zweig verzweigt, wonach das Verfahren im Schritt 190 beendet wird (Die Meßschleife umfassend die Schritte 110, 120, 130 und 140 läuft selbstverständlich weiter).

Soll die Auswertung fortlaufend durchgeführt werden, zweigt das Verfahren im Schritt 180 je nach Vereinbarung über den Schritt 200 oder den Schritt 210 zurück. Bei Rückverzweigung gemäß Schritt 200 oder Schritt 210 können die Schritte 150 bis 180 fortlaufend regelmäßig (wie vorliegend dargestellt) oder auch ereignis- bzw. schwellwertgetriggert vorgenommen werden.

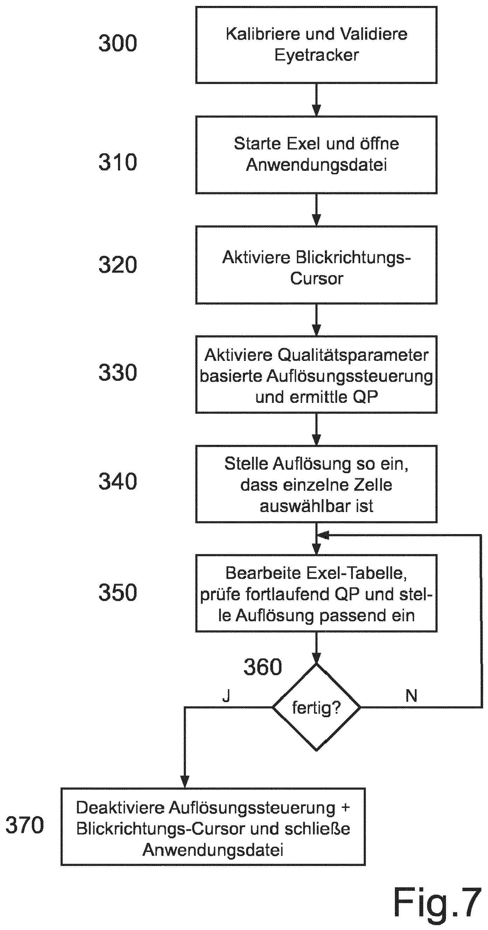

Fig. 7 zeigt ein Ausführungsbeispiel des erfindungsgemäßen Verfahrens am Beispiel des Tabellenkalkulationsprogramms Excel und der Verwendung eines Eyetrackers als Tracking-Vorrichtung. Dabei wird zunächst in Schritt 300 der Eyetracker kalibriert und validiert. Zu diesem Zweck misst der Eyetracker beispielsweise, wohin der Benutzer 14 auf dem Monitor 12 blickt (gaze point), und validiert die Genauigkeit in Abhängigkeit der Monitorkoordinaten. In Schritt 310 wird Excel gestartet und eine Anwendungsdatei geöffnet. Anschließend wird in Schritt 320 ein Blickrichtungscursor aktiviert, d.h. ein Cursor, der von dem Benutzer durch Variation seiner Blickrichtung über den Monitor bewegt werden kann. Die Aktivierung erfolgt beispielsweise über eine vorgebbare Taste auf der Tastatur.

Anschließend, d.h. in Schritt 330, oder gleichzeitig mit Schritt 320 wird die qualitätsparameterbasierte Auflösungssteuerung gemäß der vorliegenden Erfindung aktiviert. Wenn dies nicht gleichzeitig in Schritt 320 erfolgt, kann es ebenfalls durch Drücken einer vorgebbaren Tastenkombination oder durch ein akustisches oder visuelles Signal in Schritt 330 erfolgen.

In Schritt 340 wird die Auflösung so eingestellt, dass in Abhängigkeit des ermittelten Qualitätsparameters im Anwendungsbeispiel mittels der Blickrichtung eine einzelne Zelle einer Excel-Tabelle ausgewählt werden kann. Die einzelne Zelle, auf die der Benutzer 14 seinen Blick richtet, wird hervorgehoben dargestellt. Alternativ könnte die Gruppe von Zellen, die der aktuellen Auflösung der Darstellung und dem Qualitätsparameter des Eyetrackers entspricht, hervorgehoben werden. Der Benutzer sieht dann, dass die Auflösung nicht ausreicht, um eine einzelne Zelle visuell zu selektieren. Aktiviert er die erfindungsgemäße Auflösungsanpassung, so wird die Auflösung so angepasst, dass er eine Zelle sicher visuell selektieren kann.

In Schritt 350 wird die jeweilige, durch Blickrichtung ausgewählte Zelle bearbeitet. Dies beinhaltet die Auswahl einer Zelle mittels der Blickrichtung, die Aktivierung des Zelleneditiermodus, indem begonnen wird, auf die Tastatur zu drücken oder zu sprechen. Anschließend wird beispielsweise eine Formel in einen Zellbereich als Argument eingegeben, um eine erste Zelle eines Zellbereichs zu adressieren. Daraufhin wird auf eine relevante Zelle geblickt und eine Taste gedrückt, um diese auszuwählen. Anschließend wird auf die letzte Zelle des relevanten Zellbereichs geblickt und die Tastatur losgelassen, um die Auswahl zu komplettieren. Anschließend wird beispielsweise die ")"-Taste gedrückt, um die Formeleingabe zu beenden. Wenn innerhalb dieses Vorgangs beispielsweise die letzte relevante Zelle des Bereichs in einem Bereich ist, der mit geringerer Genauigkeit validiert wurde als die Startzelle des relevanten Bereichs, dann wird der Zoom automatisch variiert, um eine Einzelzellauswahl in diesem Bereich zu ermöglichen. Dasselbe würde erfindungsgemäß passieren, wenn sich beispielsweise aufgrund einer geänderten Entfernung zwischen Benutzer und Eyetracker die Rauschanteile bei der Blickrichtungsmessung ändern. Alternativ könnte die Einstellung der erfindungsgemäßen Autoskalierung dergestalt sein, dass gleich, d.h. automatisch, der gesamte sichtbare Zellenbereich so in der Auflösung angepasst wird, dass der Benutzer bei den gegebenen Bedingungen immer eine Zelle sicher visuell selektieren kann.

Während der Bearbeitung der Excel-Tabelle In Schritt 350 wird demnach fortlaufend der mindestens eine Qualitätsparameter geprüft wird und die Auflösung passend eingestellt, insbesondere so, dass auch bei einer Verschlechterung des Qualitätsparameters eine einzelne Zelle einer Excel-Tabelle anwählbar bleibt.

In Schritt 360 wird geprüft, ob die Bearbeitung der Excel-Tabelle abgeschlossen ist; falls nein, wird zu Schritt 350 zurückverzweigt; falls ja, wird Schritt 370 ausgeführt, wonach die Auflösungssteuerung deaktiviert wird und/oder der Blickrichtungscursor deaktiviert wird und/oder die Anwendungsdatei oder die Anwendung, d.h. Excel, geschlossen wird oder mit einem neuen Arbeitsbereich fortgesetzt wird.

### Weitere Ausführungsformen:

1. Verfahren zum Betreiben einer Anzeigevorrichtung (12), folgende Schritte umfassend:
   a) Erfassen von Bilddaten zumindest eines Teils des Kopfes eines Benutzers (14) (Schritt 110);
   b) Ermitteln mindestens eines von dem Benutzer (14) durch Bewegung zumindest eines Teils des Kopfes veränderbaren Parameters aus den in Schritt a) erfassten Bilddaten (Schritt 120);
   c) Steuern einer visuellen Darstellung auf einer Anzeigevorrichtung (12) in Abhängigkeit des ermittelten mindestens einen Parameters (Schritt 130);
   gekennzeichnet durch folgende weiteren Schritte:
   d) Ermitteln mindestens eines Qualitätsparameters basierend auf der Erfassung in Schritt a) (Schritt 140);
   e) Variieren zumindest einer Auflösung zumindest eines Teils der visuellen Darstellung in Abhängigkeit des mindestens einen Qualitätsparameters (Schritt 150).
2. Verfahren nach Ausführungsform 1,
   dadurch gekennzeichnet,
   dass zur Ermittlung des mindestens eines Qualitätsparameters eine Qualität und/oder Größe des in Schritt b) ermittelten Parameters und/oder eine Qualität der Erfassung der Bilddaten und/oder zur Ermittlung des mindestens einen Qualitätsparameters die in Schritt a) erfassten Bilddaten analysiert werden.
3. Verfahren nach Ausführungsform 1 oder 2,
   dadurch gekennzeichnet,
   dass die visuelle Darstellung zumindest ein durch Bewegung zumindest eines Teils des Kopfes bewegbares Element umfasst, wobei in Schritt e) die Auflösung einer Bewegungsgeschwindigkeit des zumindest einen bewegbaren Elements in Abhängigkeit des mindestens einen Qualitätsparameters variiert wird.
4. Verfahren nach einer der vorhergehenden Ausführungsformen,
   dadurch gekennzeichnet,
   dass in Schritt e) die Auflösung der gesamten visuellen Darstellung in Abhängigkeit des mindestens einen Qualitätsparameters variiert wird.
5. Verfahren nach Ausführungsform 4,
   dadurch gekennzeichnet,
   dass die visuelle Darstellung zumindest ein statisches und/oder ein dynamisches Element umfasst, wobei in Schritt e) die Auflösung des statischen und/oder des dynamischen Elements in Abhängigkeit des mindestens einen Qualitätsparameters variiert wird.
6. Verfahren nach Ausführungsform 4,
   dadurch gekennzeichnet,
   dass in Schritt e) die Auflösung der gesamten visuellen Darstellung variiert wird.
7. Verfahren nach einer der Ausführungsformen 4 oder 5,
   dadurch gekennzeichnet,
   dass als Teil der visuellen Darstellung die Auflösung mindestens eines Elements aus der folgenden Gruppe variiert wird:
   - ein Bereich gemäß einer Lupenfunktion;
   - der Inhalt eines vorgebbaren Arbeitsfensters;
   - ein Mauszeiger;
   - ein Cursor;
   - ein Bedienelement einer Anwendung;
   - ein Inhaltselement oder ein Bereich der von einer Anwendung dargestellten Daten;
   - logische Segmente einer Anwendung, die die visuelle Darstellung erzeugt.
8. Verfahren nach einer der vorhergehenden Ausführungsformen,
   dadurch gekennzeichnet,
   dass zur Ermittlung des mindestens einen Qualitätsparameters mindestens eine Größe aus der folgenden Gruppe ermittelt wird:
   - Parameter der in Schritt a) erfassten Bilddaten, insbesondere Rauschanteile, Frequenz-, Intensitätsverteilungen im Bild und/oder des mindestens einen ermittelten Objekts;
   - Parameter bei der Auswertung der in Schritt a) erfassten Bilddaten, insbesondere bei aus den erfassten Bilddaten berechneten Zwischen- oder Ergebnisdaten.
9. Verfahren nach Ausführungsform 8,
   dadurch gekennzeichnet,
   dass zur Ermittlung des mindestens einen Qualitätsparameters die in Schritt a) erfassten Bilddaten analysiert werden im Hinblick auf mindestens eine der folgenden Größen:
   - Frequenzanteile in vorgebbaren Frequenzbereichen, insbesondere durch örtlich-zeitliche Frequenzanalyse oder Wavelets;
   - Kontrastwerte in vorgebbaren Bildbereichen, insbesondere Gradienten, Kanten, Intensitäten, Häufigkeiten/Verteilungen in Bildbereichen;
   - Größenwerte von vorgebbaren Parametern;
   - Größenwerte von Ergebnisdaten;
   - das Vorhandensein mindestens eines vorgebbaren Objekts; und/oder
   - eine Änderungs- oder Beschleunigungsrate von aus den in Schritt a) erfassten Bilddaten ermittelten Zwischen- oder Ergebnisdaten.
10. Verfahren nach einer der vorhergehenden Ausführungsformen,
   dadurch gekennzeichnet,
   dass die Auflösung gemäß einer linearen, einer nicht-linearen, einer stetigen und/oder einer nicht-stetigen Kennlinie variiert wird.
11. Verfahren nach einer der vorhergehenden Ausführungsformen,
   dadurch gekennzeichnet,
   dass die Variation der Auflösung durch einen Benutzer (14) ein- und ausgeschaltet werden kann, insbesondere durch einen Tastenbefehl, einen Sprachbefehl oder einen Gestenbefehl.
12. Verfahren nach einer der vorhergehenden Ausführungsformen,
   dadurch gekennzeichnet,
   dass mindestens eine einmal eingestellte Auflösung durch einen Benutzer (14) abhängig oder unabhängig von einer Anwendung, die die visuelle Darstellung erzeugt, gespeichert und wieder abgerufen wird, wobei das Speichern und das Abrufen durch voreingestellte oder vom Benutzer vorgebbare Interaktionen, insbesondere durch Tastenbefehle, Sprachbefehle oder Gestenbefehle erfolgt oder dass ein Kontext mitgespeichert wird und das Abrufen einer gespeicherten Auflösung automatisch bei Eintreten des Kontexts erfolgt.
13. Verfahren nach Ausführungsform 12,
   dadurch gekennzeichnet,
   dass der Kontext aus einem oder mehreren der folgenden Parameter bestimmt wird:
   - eine vorgebbare Anwendung;
   - eine vorgebbare Datei;
   - eine vorgebbare Ansicht einer Anwendung, insbesondere der Toolbars, Fenster, Werkzeuge;
   - eine vorgebbare Ansicht einer Datei, insbesondere bezüglich der sichtbaren Daten, der Bearbeitungseinstellungen, des Layouts, der sichtbaren Strukturen;
   - ein bestimmte Prozessschritt in einem Ablauf, der durch eine Anwendung angeboten wird.
14. Verfahren nach einer der vorhergehenden Ausführungsformen,
   dadurch gekennzeichnet,
   dass der mindestens eine Qualitätsparameter ermittelt wird:
   - nach Schritt a), insbesondere mit Schritt b) oder zwischen Schritt b) und Schritt c);
   - fortlaufend, d.h. nach Schritt a) und weiterhin in vorgebbaren zeitlichen Abständen und/oder in Abhängigkeit mindestens eines vorgebbaren Ereignisses, bevorzugt bei Über- und/oder Unterschreiten mindestens eines vorgebbaren Schwellwerts für Bild-, Zwischen- oder Ergebnisdaten, insbesondere mindestens eines aus diesen Daten abgeleiteten Qualitätsparameters.
15. Verfahren nach einer der vorhergehenden Ausführungsformen,
   dadurch gekennzeichnet,
   dass die Anpassung der Auflösung nach mindestens einer der folgenden Bedingungen erfolgt:
   - fortlaufend, wann immer der Qualitätsparameter einen neuen Wert erhält;
   - wenn der Qualitätsparameter mindestens einen vorgebbaren Schwellwert überschreitet;
   - wenn sich der Kontext ändert;
   - wenn der Benutzer eine vorgebbare Aktion ausführt, insbesondere eine vorgebbare Taste drückt, eine vorgebbare Geste ausführt und/oder ein vorgebbares akustisches Signal gibt.
16. Verfahren nach einer der vorhergehenden Ausführungsformen,
   dadurch gekennzeichnet,
   dass als der mindestens eine Teil des Kopfes des Benutzers (14) dessen Kopf und/oder ein und/oder zwei Augen des Benutzers (14) bewegt wird/werden.
17. Rechnerprogrammprodukt mit einem Programm für eine Rechnereinrichtung, mit Programmcodeabschnitten zum Ausführen und/oder Veranlassen der Schritte gemäß einer der vorhergehenden Ausführungsformen, wenn das Programm auf der Rechnereinrichtung ausgeführt wird.
18. System zum Betreiben einer Anzeigevorrichtung (12; 12a, 12b) mit
   - einer Erfassungsvorrichtung (15; 15a, 15b, 17) zum Erfassen von Bilddaten zumindest eines Teils des Kopfes eines Benutzers (14);
   - mindestens einer Recheneinrichtung (24), die ausgelegt ist, mindestens einen von dem Benutzer (14) durch Bewegung zumindest eines Teils des Kopfes veränderbaren Parameter aus den von der Erfassungsvorrichtung (15; 15a, 15b, 17) erfassten Bilddaten zu ermitteln;
   - einer Steuervorrichtung (22) zum Steuern einer visuellen Darstellung auf einer Anzeigevorrichtung (12) in Abhängigkeit des von der Recheneinrichtung (24) ermittelten mindestens einen Parameters;
      dadurch gekennzeichnet,
      dass mindestens eine Recheneinrichtung (24) vorgesehen ist, die ausgebildet ist, basierend auf den in Schritt a) erfassten Bilddaten mindestens einen Qualitätsparameter zu ermitteln, wobei die Steuervorrichtung (22) weiterhin ausgelegt ist, zumindest eine Auflösung zumindest eines Teils der visuellen Darstellung in Abhängigkeit des mindestens einen Qualitätsparameters zu variieren.

## Patentansprüche

1. Verfahren, umfassend:
Erfassen von Bilddaten eines Auges eines Benutzers;
Ermitteln eines Eyetracking-Parameters basierend auf den Bilddaten;
Ermitteln eines Qualitätsparameters, der die Genauigkeit des Eyetracking-Parameters anzeigt; und
Bewegen eines beweglichen Elements einer visuellen Darstellung einer Softwareanwendung basierend auf dem Eyetracking-Parameter und dem Qualitätsparameter, wobei eine Bewegungsgeschwindigkeit des beweglichen Elements auf dem Qualitätsparameter basiert.

2. Verfahren nach Anspruch 1, wobei der Eyetracking-Parameter einen Blickpunkt des Benutzers beinhaltet.

3. Verfahren nach Anspruch 1 oder 2, wobei der Qualitätsparameter ein Maß für die Variation zwischen dem ermittelten Eyetracking-Parameter und einem tatsächlichen Wert des Eyetracking-Parameters anzeigt.

4. Verfahren nach einem der Ansprüche 1 bis 3, wobei das Bewegen des beweglichen Elements ein Bewegen einer Auswahlvorrichtung basierend auf dem Eyetracking-Parameter beinhaltet und die Bewegungsgeschwindigkeit der Auswahlvorrichtung auf dem Qualitätsparameter basiert.

5. Verfahren nach einem der Ansprüche 1 bis 3, wobei das Bewegen des beweglichen Elements ein Scrollen einer Darstellung basierend auf dem Eyetracking-Parameter beinhaltet und die Bewegungsgeschwindigkeit des Scrollens der Darstellung auf dem Qualitätsparameter basiert.

6. Verfahren nach einem der Ansprüche 1 bis 3, wobei das Bewegen des beweglichen Elements ein Bewegen eines Lupenbereichs basierend auf dem Eyetracking-Parameter beinhaltet und die Bewegungsgeschwindigkeit des Lupenbereichs auf dem Qualitätsparameter basiert.

7. Verfahren nach einem der Ansprüche 1 bis 6, wobei die Bewegungsgeschwindigkeit reduziert wird, wenn der Qualitätsparameter eine geringere Genauigkeit des Eyetracking-Parameters anzeigt.

8. Verfahren nach einem der Ansprüche 1 bis 6, wobei die Bewegungsgeschwindigkeit reduziert wird, wenn der Qualitätsparameter eine höhere Genauigkeit des Eyetracking-Parameters anzeigt.

9. Verfahren nach einem der Ansprüche 1 bis 8, wobei das Ermitteln des Qualitätsparameters auf den Bilddaten basiert.

10. Verfahren nach Anspruch 9, wobei das Ermitteln des Qualitätsparameters ein Ermitteln eines Rauschwerts der Bilddaten beinhaltet.

11. Verfahren nach Anspruch 9 oder 10, wobei das Ermitteln des Qualitätsparameters ein Ermitteln beinhaltet, ob die Bilddaten ein zweites Auge des Benutzers beinhalten.

12. Verfahren nach einem der Ansprüche 9 bis 11, wobei das Ermitteln des Qualitätsparameters ein Ermitteln einer Differenz zwischen einem ersten Wert des Eyetracking-Parameters, der für eine erste Zeit erhalten wurde, und einem zweiten Wert des Eyetracking-Parameters, der für eine zweite Zeit erhalten wurde, beinhaltet.

13. Vorrichtung, umfassend:
eine Kamera, um Bilddaten eines Auges eines Benutzers zu erhalten;
einen Eyetracker zum Ermitteln eines Eyetracking-Parameters basierend auf den Bilddaten und zum Ermitteln eines Qualitätsparameters, der die Genauigkeit des Eyetracking-Parameters anzeigt; und
eine Anzeige zum Darstellen einer visuellen Darstellung einer Softwareanwendung und zum Bewegen eines beweglichen Elements der visuellen Darstellung der Softwareanwendung basierend auf dem Eyetracking-Parameter und dem Qualitätsparameter, wobei eine Bewegungsgeschwindigkeit des beweglichen Elements auf dem Qualitätsparameter basiert.

14. Vorrichtung nach Anspruch 13, wobei die Anzeige eine binokulare Anzeige beinhaltet.

15. Vorrichtung nach Anspruch 13 oder 14, wobei die Kamera, der Eyetracker und die Anzeige in einem kopfgetragenen Display integriert sind.
